(19) Europäisches Patentamt / European Patent Office / Office européen des brevets

(11) **EP 4 614 124 B1**

(12) **EUROPEAN PATENT SPECIFICATION**

(45) Date of publication and mention of the grant of the patent:
**05.08.2026 Bulletin 2026/32**

(21) Application number: **24161075.7**

(22) Date of filing: **04.03.2024**

(51) International Patent Classification (IPC):
*H01Q 1/00* (2006.01)     *G01K 7/00* (2006.01)
*G01B 11/24* (2006.01)     *H01Q 3/01* (2006.01)
*G01B 21/32* (2006.01)     *G01K 1/02* (2021.01)
*G01K 7/42* (2006.01)      *H01Q 1/28* (2006.01)
*H01Q 3/26* (2006.01)

(52) Cooperative Patent Classification (CPC):
**H01Q 1/002; G01B 21/32; G01K 1/026; G01K 7/427; H01Q 3/01;** G01K 2213/00; G06F 2119/08; H01Q 1/288; H01Q 3/26

(54) **METHOD FOR DETERMINING A DEFLECTION OF A BODY BASED ON A TEMPERATURE PROFILE OF THE BODY**

VERFAHREN ZUR BESTIMMUNG EINER AUSLENKUNG EINES KÖRPERS BASIEREND AUF EINEM TEMPERATURPROFIL DES KÖRPERS

PROCÉDÉ DE DÉTERMINATION D'UNE DÉVIATION D'UN CORPS SUR LA BASE D'UN PROFIL DE TEMPÉRATURE DU CORPS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**10.09.2025 Bulletin 2025/37**

(73) Proprietor: **Airbus Defence and Space GmbH**
**82024 Taufkirchen (DE)**

(72) Inventors:
• **MÖSSINGER, Alexander**
  **82024 Taufkirchen (DE)**
• **SCHOLZ, Thorsten**
  **82024 Taufkirchen (DE)**

(74) Representative: **LKGLOBAL Partnerschaftsgesellschaft mbB**
**Brienner Straße 11**
**80333 München (DE)**

(56) References cited:
• **ZHU XUSHENG ET AL: "Accuracy Improving Deformation Measurement System for Large Components in Thermal Vacuum Using Close-Range Photogrammetry", INTERNATIONAL JOURNAL OF PRECISION ENGINEERING AND MANUFACTURING, KOREAN SOCIETY FOR PRECISION ENGINEERING, SPRINGER, vol. 21, no. 7, 21 April 2020 (2020-04-21), pages 1201 - 1216, XP037165147, ISSN: 2234-7593, [retrieved on 20200421], DOI: 10.1007/S12541-020-00342-8**

## Description

Technical Field

The description generally relates to techniques for detecting thermo-elastic deformation of a body. In particular, the description relates to a method for determining a deflection of a body based on a temperature profile of the body. Furthermore, the description relates to an antenna system which implements the steps of said method, without limiting the scope of this description to be used in the context of antenna systems.

Background

The shape of the surface of a body has an impact on the structural and electromagnetic properties of that body. For example, when an antenna is subject to deformation, its signal receiving and signal emitting properties varies and may require compensation, e.g., by applying a correction factor to the antenna signals. In order to determine appropriate correction factors, knowledge of the actual shape or deformation of the antenna is required.

Deformation of an antenna may result from thermo-elastic deformation due to varying temperature of the environment and/or impact of dissipation of system components, e.g. amplifiers belonging to the antenna system.

However, determining the deformation of the antenna surface might require complex measurement equipment which might be disadvantageous for certain use cases.

Zhu Xusheng et al.: "Accuracy Improving Deformation Measurement System for Large Components in Thermal Vacuum Using Close-Range Photogrammetry", International Journal of Precision Engineering and Manufacturing, Korean Society for Precision Engineering, Springer, Vol. 21, no 7, 21 April 2020, pages 1201-1216, describes an approach for determining structure deformation of a spacecraft due to variation of temperature using close-range photogrammetry. A measurement platform is described to provide a space simulation chamber where temperature of specimen ranging from -170°C to +140°C can be provided. Coordinates of measurement points are measured by closephotogrammetry. The coordinates of the measurement points are acquired by a camera from different positions of the camera. An approach for transforming the coordinates of the measurement points from one coordinate system to another coordinate system is described. The method is used to determine if the deformation of the body is within predetermined ranges.

Summary

The object is to provide an alternative approach for determining deformation of a body, like an antenna body, in particular for determining deformation resulting from thermo-elastic effects.

A method for determining a deflection of a body based on a temperature profile of the body according to the features of the independent claim is provided. Furthermore, an antenna system is provided. Further developments can be derived from the dependent claims and from the following description.

Many of the features described with reference to the method may be implemented as functions of the antenna system, especially as functions of a computing device comprised by the antenna system. The functions described with reference to the antenna system may also be implemented as method steps. Therefore, the description provided in the context of the method applies in an analogous manner to the antenna system.

According to the invention, a method for determining a deflection of a body based on a temperature profile of the body is provided. The method comprises: identifying at least one characteristic point of the body; capturing a thermal profile of the body by a temperature acquisition unit; determining a deflection value of the at least one characteristic point by a deflection determination unit; partitioning a surface of the body into multiple surface regions, wherein the capturing of the thermal profile of the body includes capturing a thermal profile of each surface region; determining, by a computing device, a set of correlation scores, wherein each correlation score of the set of correlation scores is indicative of a correlation between the thermal profile of each surface region and the deflection value of the characteristic point; identifying, by the computing device, those correlations scores from the set of correlation scores that exceed a predetermined threshold value; grouping, by the computing device, the surface regions belonging to the correlations scores that exceed the predetermined threshold value into a group of relevant surface regions; and relating the captured thermal profile of the group of relevant surface regions to the determined deflection value of the at least one characteristic point. The method further includes capturing the thermal profile of the group of relevant surface regions only, and determining the deflection value of the at least one characteristic point based on the thermal profile of the group of relevant surface regions, and determining a shape of the surface of the body based on the deflection value of the at least one characteristic point.

The position of characteristic points and the deflection of these characteristic points with respect to an initial position or state of the characteristic points can be used as an indicator of the deformation of the surface of an entire body. For example, depending on the position and number of support or fixation points of a body and depending on the preload applied to the body when mounting the body to the fixation points, there is a certain relation between the deflection of certain characteristic points and the deformation of the surface of the body. Thus, the deflection of the characteristic points can be used as a measure or indication of the deformation of the body. Instead of identifying the shape of the surface of a body by complex measurement techniques, a simple determination of the deflection of the characteristic points can be used to substitute the relatively complex measurement techniques for acquiring the shape of the surface of the body. This approach enables to use simple measurement technology suitable for acquiring the deflection of the characteristic points instead of complex measurement techniques for acquiring the shape of a surface.

Determining the deflection value of a characteristic point may be done by measuring the actual deflection value of the characteristic point or by using a simulation in order to determine the deflection value of the characteristic point. However, any reference in this description to "measuring a deflection value" is to be understood as a non-limiting example and to generally relate to a determination of a deflection value by either measurement or simulation.

However, in certain environments, it may also be a challenge to determine the deflection of a characteristic point of a surface of a body. The approach described herein proposes that a temperature of a surface of the body is measured and that this temperature is correlated with the deflection of the characteristic point. Thus, the temperature is used as an indicator of the deflection of the characteristic point and the deflection of the characteristic point can be determined based on the captured temperature value. Then, the deflection of the characteristic point determined in that way is used to determine the shape of the surface of the body.

The body typically includes characteristic points like edges or corners. These characteristic points deflect, i.e., change their position from an initial position, when the body deforms. This deformation may be called thermo-elastic deformation. As a starting point of the method, one or more characteristics points may be identified and selected for performing the subsequent method steps.

The body may deform as a result of changing thermal conditions, e.g., the body may be subject to thermo-elastic deformation resulting from radiation onto the body.

The shape of the body may define the geometric shape of a surface of the body and may be described by a mathematic equation.

The position of the at least one characteristic point may be indicated by a deflection from an initial state or default state of the characteristic point.

The temperature profile of the body and/or of the surface regions particularly includes the temperature over time.

The computing device identifies those surface regions of the body which highly correlate with the deflection of the characteristic points, i.e., those surface regions whose correlation score between their thermal profile and the deflection value of the characteristic point exceeds the predetermined threshold value.

In order to identify the surface regions which highly correlate with the deflection value of the characteristic point, the temperature acquisition unit needs to capture the temperature profile of the entire surface of the body, i.e., of all surface regions either by direct measurement or simulation.

After identifying the surface regions which highly correlate with the deflection value of the characteristic point, the temperature profile of these surface regions can be related to the deflection value of the at least one characteristic point. In other words, a relation is determined between the temperature value and/or the temperature profile of one or more surface regions and the deflection value of the characteristic points. This relation can be stored in a look-up table, or an equation can be determined that describes the relation between the temperature profile of the surface region(s) and the deflection value of the characteristic point(s), for example by regression analysis.

With this relation, it is now possible to simply capture the temperature profile of some surface regions (those surface regions which were identified that their temperature profile highly correlates with the deflection value of the characteristic point) and determine the deflection value based on the captured temperature profile. The deflection value can then be used in a subsequent step to determine the shape of the surface of the body.

For example, this approach can be applied to an antenna. An antenna is subject to solar radiation and other sources which have an impact on the temperature of the antenna. Varying temperature values cause thermo-elastic deformations of the antenna which in turn modifies the antenna signals, e.g., received and/or transmitted antenna signals. This modification to the antenna signals typically requires compensation or correction in order to obtain reliable antenna signals.

In particular, such compensation or correction may be important for RADAR-antennas, like synthetic aperture RADAR antennas.

Existing techniques to be used to determine the shape of the (SAR) antenna are based on pattern correlation and are typically conducted during the in-orbit commissioning phase. However, these methods only can provide a "snapshot" during the commissioning phase but cannot provide an assessment of the dynamic deformation the antenna might face during its lifetime.

The approach described herein allows determining the deflection values of characteristic points of a body (e.g., antenna body) based on temperature profiles of certain regions of the surface of the body and hence can provide insitu data of the actual deflection over the entire lifetime. In other words, (a) measurement of the temperature at certain surface regions is a substitute for the deflection value of characteristic points, and (b) the deflection value of the characteristic points can in turn be used to determine the shape of the body. In the context of an antenna, the determined shape of the antenna body is then the basis for determining the correction factor for the signals captured or transmitted by the antenna. The method described herein proposes how to determine the deflection values of a characteristic point of a body based on temperature measurement, i.e., relates to step (a) indicated above and is the basis for determining the shape of the body (step (b)), which is then used to determine the correction factors, e.g. for the TR-modules of an antenna or for the on-ground processing.

According to the invention, the method further comprises capturing the thermal profile of the group of relevant surface regions only, and determining the deflection value of the at least one characteristic point based on the thermal profile of the group of relevant surface regions.

Once the surface regions whose temperature profile highly correlates with the deflection value of the characteristic point are identified, the temperature profiles of these relevant surface regions are sufficient to determine the deflection value of the characteristic point. The deflection value is determined based on the temperature profile of the relevant surface regions and the relation between the thermal profile of the relevant surface regions and the deflection value of the characteristic point.

According to an embodiment, the at least one characteristic point is an edge or a corner of the body.

Thus, a tip deflection of the body may be determined, and this tip deflection can be used to determine the shape of the entire surface of the body.

According to another embodiment, the method further comprises attaching a temperature sensor that is assigned to the temperature acquisition unit to each of the relevant surface regions.

A temperature sensor is only required for the relevant surface regions which are highly correlated with the deflection value of the characteristic point. Thus, the approach described herein allows for a reduced number of temperature sensors. A temperature sensor is not required for the non-relevant surface regions.

According to another embodiment, the method further comprises transmitting the thermal profile of the group of relevant surface regions to a base station for determining the deflection value of the characteristic point and the shape of the body.

The captured temperature profile of the relevant surface regions may be transmitted to a separate entity which then performs the computational steps, i.e., determines the deflection value of the characteristic point based on the temperature profiles of the relevant surface regions, and determines the shape of the surface of the body based on the deflection value of the characteristic point.

According to another embodiment, the body is an antenna body of an antenna.

This embodiment describes an exemplary use case of the method described herein. However, the method may be applied to other bodies and is not limited to antenna bodies.

According to another embodiment, the antenna body is a multilayer body.

The method may be applied to an antenna that comprises multiple layers, e.g., a sandwich plate with multiple layers. For example, the sandwich plate may be a fiber-reinforced composite with two cover layers and a core layer in between, or a stack of several sandwiches.

According to another embodiment, the thermal profile of the body is captured by the temperature acquisition unit over a predetermined period of time.

This serves the purpose of tracking the temporal variations of the thermal profile. A cyclic change of the thermal profile may thus be predicted and the variation of the shape of the body may be determined more precisely.

According to another embodiment, the deflection value of the at least one characteristic point is determined by the deflection determination unit over a predetermined period of time, e.g. by measurement or by simulation.

According to another embodiment, an antenna system is described, and the antenna system comprises an antenna, a base station, a temperature acquisition unit associated with the antenna, a deflection determination unit, and a computing device. The computing device is configured to execute the method for determining a deflection of a body based on a temperature profile of the body as described herein.

Brief description of the drawings

The subject matter will hereinafter be described in conjunction with the following drawing figures, wherein like numerals denote like elements, and wherein:

Fig. 1 is a schematic representation of a planar body;

Fig. 2 is a schematic representation of a partitioned surface of the body shown in Fig. 1;

Fig. 3 is a schematic representation of a deformed body;

Fig. 4    is a schematic representation of a system for determining a relation between a temperature profile and a shape of a planar body;

Fig. 5    is a schematic representation of an antenna system;

Fig. 6    is a schematic representation of the steps of a method for determining a relation between a temperature profile and a shape of a planar body.

Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

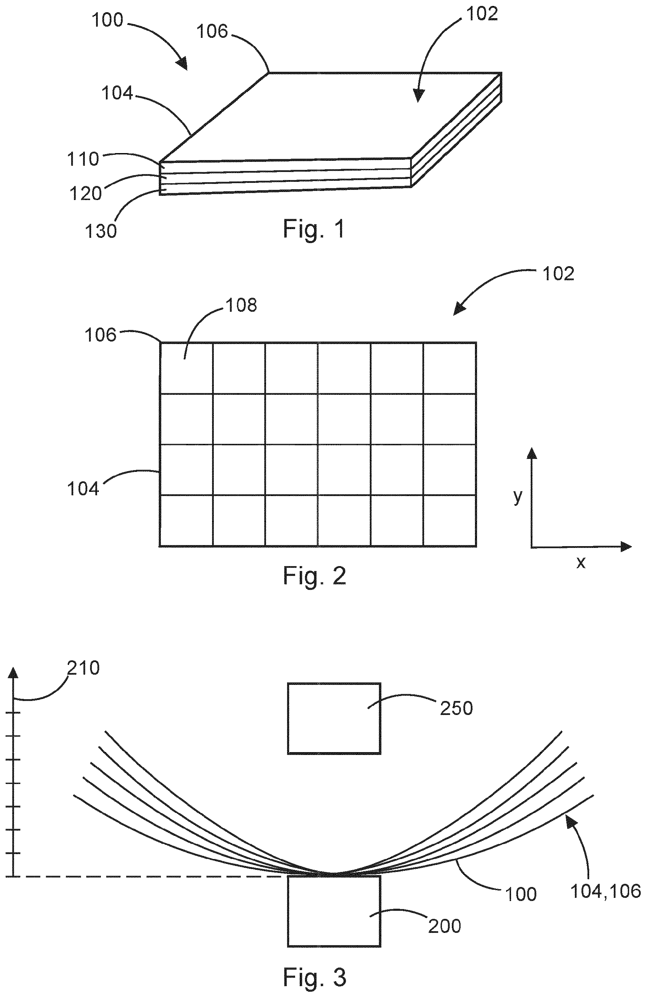

Fig. 1 shows a body 100. The body 100 is a sandwich structure with three layers, namely a first layer 110, a second layer 120, and a third layer 130. The first and third layers 110, 130 are cover layers with the second layer 120 being a core layer arranged between the first layer 110 and the third layer 130.

The body 100 has a surface 120 as well as multiple edges 104 and corners 106.

The body 100 may be an antenna body which is subject to thermo-elastic deformation, as exemplarily described in the following non-limiting use case. The antenna body may consist of multiple layers or a stack of layers as described above.

It has been discovered that the performance of a synthetic aperture RADAR (SAR) is very sensitive to errors in the flatness of the antenna aperture leading to very stringent requirements for the antenna planarity. As described above, the antenna does not need to be perfectly flat, but the shape of the antenna needs to be known in order to be able to compensate for the effect a deformed antenna has on the measured signals.

In particular, when the antenna is part of a satellite, owing to in-orbit effects, namely the thermo-elastic deformation (TED), the required planarity may not be guaranteed by the antenna's mechanical design. If the deflection of the antenna is known, the impact can be mitigated by adjusting the phase settings of the antenna's TR-modules as well as by adapting the coefficients of digital beamforming techniques like Multiple Azimuth Phase Center Systems (MAPS) and Scan On Receive (SCORE), e.g., in the ground-processing according to the actual antenna deflection.

The method described herein generates the knowledge of the antenna's deflection by means of using simple on-board temperature readings. This method enables correction of the dynamic deflection of the antenna owing to temperature induced in-orbit effects.

The method described herein is based on evaluating the correlation of the thermal gradients on the body 100 with the body's deflection caused by those dynamically changing thermal gradients. This analysis yields the locations of characteristic points on the surface of the body 100 which corelate best with the dynamic behavior of the deflection of the characteristic points like edges 104 and corners 106 of the body 100.

The method described herein relies on temperature measurement. Thus, it is not necessary to measure the deflection of the characteristic points (like edges 104 and corners 106 of the body 100) directly.

The method described herein allows to assess and correct for dynamically changing deformations, e.g., TED, because the thermal profile is measured over a certain period of time, like for one or more entire orbit phases and provides instantaneous knowledge of the antenna deformation in-orbit, allowing to implement electronic correction measures and hence enabling a lighter weight antenna design. In other words, the antenna is not necessarily designed to limit deformation because the method described herein allows for determining the deformation resulting from thermo-elastic deformation effects and allows to compensate for the effects of this deformation.

Fig. 2 shows the surface 102 of the body 100 shown in Fig. 1. The surface 102 is partitioned into multiple surface regions 108. The surface region is used as a basis for deriving a model which maps the temperature profile of the surface 102 to the thermo-elastic deformation of the characteristic points of the body 100, like the edge 104 or the corner 108.

The thermo-elastic deformation of the body 100 during one orbit is simulated, for example by applying an equivalent of the solar radiation onto the antenna. The thermal profile of the body is acquired by a temperature acquisition unit. This is done by acquiring the temperature of each surface region 108. Furthermore, the deflection of a characteristic point 104, 106 is determined and the temperature profile of the surface regions 108 is mapped to the deflection of the characteristic point 104, 106.

Incident solar radiation causes the temperature on the surface 102 to vary. The surface regions 108 do not necessarily have the same temperature due to several reasons, for example a support structure attached to the body 100, active electrical components being adjacent to the body 100, or the like. However, thermo-elastic deformation results from solar radiation causing the body 100 to deform under thermal load, as shown in Fig. 3.

Fig. 3 shows a body 100 (an antenna panel, for example) in different deformation states. Depending on the thermal load applied to the antenna panel, the antenna panel deforms differently and the characteristic points 104, 106 deflect differently, i.e., to a different extent. The deflection of the characteristic points 104, 106 are shown with reference to the deflection scale 210.

The antenna body 100 is mounted to a support structure 200. The transmit/receive-module 250 receives or transmits antenna signals which are radiated by the antenna aperture. However, when the antenna panel is subject to thermo-elastic deformation, the antenna aperture changes and thus the signals transmitted or received by the TR-modules 250 vary and may require compensation. In order to compensate the signals correctly, the deformation of the antenna panel needs to be known.

With further reference to Fig. 2 and the mapping of the thermal profile of the surface 102 with the deflection of the characteristic points 104, 106, the results from thermal and mechanical TED analysis are then linked via the orbit-time and merged into a table (e.g., a common computer file) with the individual model nodes (thermal and mechanical model) interpolated on a common spatial grid.

The deformation of an antenna body, e.g., consisting of multiple layers or a multilayer sandwich structure, typically follows a characteristic profile. In the present example, this characteristic profile is a parabolic profile as shown in Fig. 3. Hence, the deformation of the antenna plate can be represented by just considering only the maximum deflection at the tip (at the characteristic points 104, 106) of the antenna while assuming that the characteristic parabolicshaped profile is valid for all thermal conditions of the antenna.

Different thermal load results in different thermo-elastic deformation and, hence, different deflection of the characteristic points.

In the example of Fig. 3, the vertical deflection of the characteristic point is selected and referred as "tip deflection". The tip deflection can be captured for a predetermined period of time, e.g., for an entire orbit simulation. During this orbit simulation, the antenna system may be in an operative state to also capture the impact of the heat generated by active electronic components of the antenna system or other components of the satellite.

In this example, the tip deflection may be captured for the predetermined period of time and the deflection value is recorded for this period of time. Furthermore, the temperature profile of the surface regions 108 shown in Fig. 2 is also captured for the same period of time and the tip deflection can be correlated to the temperature profile.

This means that the cross-correlation of the deflection value (which is an indicator for the deformation of the antenna plate) with the captured temperature profile (the simulated transient temperatures) at each surface region 108 is computed resulting in a correlation map. This step correlates the transient behavior of each surface region of the underlying thermal model of the antenna with the antenna's deflection value at the characteristic point.

As a result of this correlation map, those surface regions 108 can be identified which highly correlate with the deflection of the characteristic points 104, 106. The surface regions identified in this step are referred to as relevant surface regions. These relevant surface regions are good indicators for the deflection value and, thus, for the shape of the antenna panel. Thus, these relevant surface regions are the surface regions which need to be monitored in regards of their thermal profile to determine the deflection value based on said thermal profile.

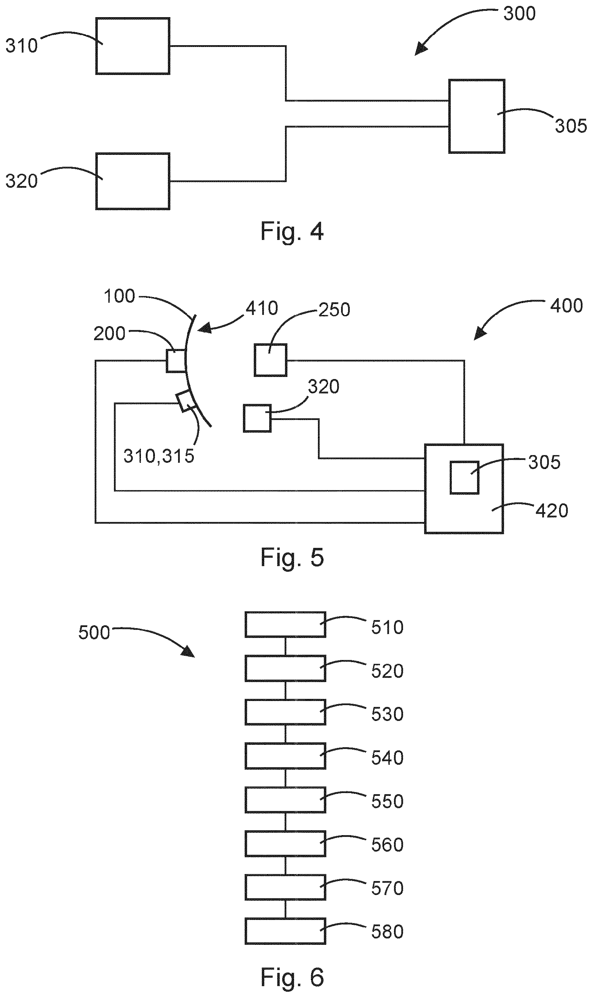

The temperature of the relevant surface regions may be captured by temperature sensors 315 (see Fig. 5) which are attached to the surface regions 108.

For determining the relevant surface regions, not only the position with the highest correlation is selected but also the gradient of the correlation which is depicted in the figure below may be considered. The optimal thermistor position for each panel is found by selecting the $x_T/y_T$ which maximizes the following expression:

$$A = |\rho(TED, T_{x_T,y_T})| - |\nabla(\rho(TED, T_{x_T,y_T}))|^N$$

with N being a weighting coefficient, $\rho(TED, T_{x_T,y_T})$ being the cross-correlation over time of the tip deflection and the temperature at the position $x_T/y_T$, with x being a position/distance value of the horizontal position (x-scale) in Fig. 2 and y being a position/distance value of the vertical position (y-scale) in Fig. 2. N is a number which depends on the particular antenna system, with N=0.75 being a favorable number for the given example.

Fig. 4 shows a system 300 for determining a relation between a temperature profile and a shape of a planar body. The system 300 comprises a computing device 305, a temperature acquisition unit 310, and a deflection determination unit 320.

The temperature acquisition unit 310 may comprise one or more temperature sensors and is configured to measure a temperature profile of a body 100 as described above. The deflection determination unit 320 determines the deflection of characteristic points 104, 106 of the body 100 when the body 100 is subject to radiation and experiences thermo-elastic deformation, either by measurement or by simulation. Thus, the computing device 305 receives temperature profile data and deflection value measurement data relating to the body. These values are captured over a predetermined period of time and are stored by the computing device 305. The computing device 305 correlates the temperature profile data and the deflection values with each other to identify surface regions of the body whose temperature values highly correlate with the deflection value. When the highly correlating surface regions are identified, it is known which surface regions need to be monitored with regard to their temperature in order to determine the deflection value of the characteristic points. Then, only these relevant surface regions need to be monitored and their temperature be measured to determine a reliable value for the deflection of the characteristic points which is then used as an indicator of the shape of the body 100.

With this approach, the temperature sensor (e.g., a Thermistor) is placed in a position which yields a good correlation but also provides a robust solution with regard to model and thermistor placement errors, since also the gradient of the correlation at the proposed position is considered.

Fig. 5 shows an antenna system 400. The antenna system 400 comprises an antenna 410 and a base station 420. The antenna 410 comprises an antenna body 100 like the body 100 shown in Figs. 1 to 3. The antenna body 100 is supported by a support structure 200 and a temperature acquisition unit 310 with a temperature sensor 315 is attached to a relevant surface region of the antenna body.

The base station 420 comprises a computing device 305. In order to determine the correlation between the temperature profile and the deflection of the antenna plate, the antenna system 400 comprises a deflection determination unit 320 which determines the deflection of the characteristic points of the antenna plate based on measurement, simulation or analysis. However, once the temperature profile of the antenna plate and the deflection value of the characteristic points are correlated with each other, the deflection determination unit 320 is no longer needed. Only the temperature needs to be captured by the temperature sensor 315 and the computing device 305 can determine the deflection value of the characteristic points based on the temperature profile of the relevant surface sections. Subsequently, the computing device 305 uses the deflection value to determine the shape or deflection of the antenna plate. The shape/deflection of the antenna plate is then used to determine corresponding correction factors for being applied, e.g., to the antenna signals provided by the TR-module 250 of the antenna or to the on-ground processing.

Fig. 6 schematically shows the steps of a method 100 for determining a deflection of a body based on a temperature profile of the body. The method comprises the following steps: in a first step 510, identifying at least one characteristic point of the body; in a second step 520, capturing a thermal profile of the body by a temperature acquisition unit; in a third step 530, capturing a deflection value of the at least one characteristic point by a deflection determination unit; in a fourth step 540, partitioning a surface of the body into multiple surface regions, wherein the capturing of the thermal profile of the body includes capturing a thermal profile of each surface region; in a fifth step 550, determining, by a computing device, a set of correlation scores, wherein each correlation score of the set of correlation scores is indicative of a correlation between the thermal profile of each surface region and the deflection value of the characteristic point; in a sixth step 560, identifying, by the computing device, those correlations scores from the set of correlation scores that exceed a predetermined threshold value; in a seventh step 570, grouping, by the computing device, the surface regions belonging to the correlations scores that exceed the predetermined threshold value into a group of relevant surface regions; in an eighth step 580, relating the captured thermal profile of the group of relevant surface regions to the captured deflection value of the at least one characteristic point.

List of reference signs

100    body
102    surface
104    edge
106    corner
108    surface region
110    first layer
120    second layer
130    third layer
200    support structure
210    deflection
250    transmit/receive module
300    system for determining a relation between a temperature profile and a shape of a planar body
305    computing device
310    temperature acquisition unit
315    temperature sensor

320     deflection determination unit
400     antenna system
410     antenna
420     base station

**Claims**

1.  A method for determining a deflection of a body (100) based on a temperature profile of the body (100), the method comprising:

    identifying at least one characteristic point (104, 106) of the body (100);
    capturing a thermal profile of the body (100) by a temperature acquisition unit (310);
    determining a deflection value of the at least one characteristic point (104, 106) by a deflection determination unit (320);
    partitioning a surface (102) of the body (100) into multiple surface regions (108), wherein the capturing of the thermal profile of the body (100) includes capturing a thermal profile of each surface region (108);
    **characterized in that** the method further comprises:

        determining, by a computing device (305), a set of correlation scores, wherein each correlation score of the set of correlation scores is indicative of a correlation between the thermal profile of each surface region (108) and the deflection value of the characteristic point (104, 106);
        identifying, by the computing device (305), those correlations scores from the set of correlation scores that exceed a predetermined threshold value;
        grouping, by the computing device (305), the surface regions belonging to the correlations scores that exceed the predetermined threshold value into a group of relevant surface regions;
        relating the captured thermal profile of the group of relevant surface regions to the determined deflection value of the at least one characteristic point (104, 106);
        capturing the thermal profile of the group of relevant surface regions only, and determining the deflection value of the at least one characteristic point (104, 106) based on the thermal profile of the group of relevant surface regions;
        determining a shape of the surface (102) of the body (100) based on the deflection value of the at least one characteristic point (104, 106).

2.  The method of claim 1,
    wherein the at least one characteristic point (104, 106) is an edge or a corner of the body (100).

3.  The method of any one of claims 1 or 2, further comprising
    attaching a temperature sensor (315) that is assigned to the temperature acquisition unit (310) to each of the relevant surface regions.

4.  The method of any one of the preceding claims, further comprising
    transmitting the thermal profile of the group of relevant surface regions to a base station (420) for determining the deflection value of the characteristic point and the shape of the body.

5.  The method of any one of the preceding claims,
    wherein the body (100) is an antenna body of an antenna (410).

6.  The method of claim 5,
    wherein the antenna body is a multilayer body.

7.  The method of any one of the preceding claims,
    wherein the thermal profile of the body (100) is captured by the temperature acquisition unit (310) over a predetermined period of time.

8.  The method of any one of the preceding claims,
    wherein the deflection value of the at least one characteristic point (104, 106) is determined by the deflection determination unit (320) over a predetermined period of time.

**9.** An antenna system (400), comprising:

an antenna (410);
a base station (420);
a temperature acquisition unit (310) associated with the antenna (410);
a deflection determination unit (320); and
a computing device (305);
**characterized in that** the computing device (305) is configured to execute the method of any one of the claims 1 to 8.

**Patentansprüche**

**1.** Verfahren zum Bestimmen einer Auslenkung eines Körpers (100) basierend auf einem Temperaturprofil des Körpers (100), wobei das Verfahren umfasst:

Identifizieren mindestens eines charakteristischen Punkts (104, 106) des Körpers (100);
Erfassen eines Wärmeprofils des Körpers (100) durch eine Temperaturerfassungseinheit (310);
Bestimmen eines Auslenkungswerts des mindestens einen charakteristischen Punkts (104, 106) durch eine Auslenkungsbestimmungseinheit (320);
Unterteilen einer Oberfläche (102) des Körpers (100) in mehrere Oberflächenregionen (108), wobei das Erfassen des Wärmeprofils des Körpers (100) das Erfassen eines Wärmeprofils jeder Oberflächenregion (108) umfasst;
**dadurch gekennzeichnet, dass** das Verfahren ferner umfasst:

Bestimmen, durch eine Rechenvorrichtung (305), eines Satzes von Korrelationswerten, wobei jeder Korrelationswert des Satzes von Korrelationswerten eine Korrelation zwischen dem Wärmeprofil jeder Oberflächenregion (108) und dem Auslenkungswert des charakteristischen Punkts (104, 106) anzeigt;
Identifizieren, durch die Rechenvorrichtung (305), jener Korrelationswerte aus dem Satz von Korrelationswerten, die einen vorbestimmten Schwellenwert überschreiten;
Gruppieren, durch die Rechenvorrichtung (305), der Oberflächenregionen, die zu den Korrelationswerten gehören, die den vorbestimmten Schwellenwert überschreiten, in eine Gruppe von relevanten Oberflächenregionen;
In-Beziehung-Setzen des erfassten Wärmeprofils der Gruppe von relevanten Oberflächenregionen mit dem bestimmten Auslenkungswert des mindestens einen charakteristischen Punkts (104, 106);
Erfassen des Wärmeprofils von nur der Gruppe von relevanten Oberflächenregionen und Bestimmen des Auslenkungswerts des mindestens einen charakteristischen Punkts (104, 106) basierend auf dem Wärmeprofil der Gruppe von relevanten Oberflächenregionen;
Bestimmen einer Gestalt der Oberfläche (102) des Körpers (100) basierend auf dem Auslenkungswert des mindestens einen charakteristischen Punkts (104, 106).

**2.** Verfahren nach Anspruch 1,
wobei der mindestens eine charakteristische Punkt (104, 106) eine Kante oder eine Ecke des Körpers (100) ist.

**3.** Verfahren nach einem der Ansprüche 1 oder 2, ferner umfassend
Anbringen eines Temperatursensors (315), der der Temperaturerfassungseinheit (310) zugeordnet ist, an jede der relevanten Oberflächenregionen.

**4.** Verfahren nach einem der vorhergehenden Ansprüche, ferner umfassend
Übertragen des Wärmeprofils der Gruppe von relevanten Oberflächenregionen an eine Basisstation (420) zum Bestimmen des Auslenkungswerts des charakteristischen Punkts und der Gestalt des Körpers.

**5.** Verfahren nach einem der vorhergehenden Ansprüche,
wobei der Körper (100) ein Antennenkörper einer Antenne (410) ist.

**6.** Verfahren nach Anspruch 5,
wobei der Antennenkörper ein Mehrschichtkörper ist.

**7.** Verfahren nach einem der vorhergehenden Ansprüche,

wobei das Wärmeprofil des Körpers (100) durch die Temperaturerfassungseinheit (310) über einen vorbestimmten Zeitraum erfasst wird.

8. Verfahren nach einem der vorhergehenden Ansprüche,
wobei der Auslenkungswert des mindestens einen charakteristischen Punkts (104, 106) durch die Auslenkungsbestimmungseinheit (320) über einen vorbestimmten Zeitraum bestimmt wird.

9. Antennensystem (400), umfassend:

   eine Antenne (410);
   eine Basisstation (420);
   eine Temperaturerfassungseinheit (310), die der Antenne (410) zugeordnet ist;
   eine Auslenkungsbestimmungseinheit (320); und
   eine Rechenvorrichtung (305);
   **dadurch gekennzeichnet, dass**
   die Rechenvorrichtung (305) konfiguriert ist, das Verfahren nach einem der Ansprüche 1 bis 8 auszuführen.


**Revendications**

1. Procédé de détermination d'une déflexion d'un corps (100) sur la base d'un profil de température du corps (100), le procédé comprenant:

   l'identification d'au moins un point caractéristique (104, 106) du corps (100) ;
   la capture d'un profil thermique du corps (100) par une unité d'acquisition de température (310);
   la détermination d'une valeur de déflexion de l'au moins un point caractéristique (104, 106) par une unité de détermination de déflexion (320);
   la division d'une surface (102) du corps (100) en de multiples régions de surface (108), dans lequel la capture du profil thermique du corps (100) inclut la capture d'un profil thermique de chaque région de surface (108);
   **caractérisé en ce que** le procédé comprend en outre:

   la détermination, par un dispositif informatique (305), d'un ensemble de scores de corrélation, dans lequel chaque score de corrélation de l'ensemble de scores de corrélation est indicatif d'une corrélation entre le profil thermique de chaque région de surface (108) et la valeur de déflexion du point caractéristique (104, 106);
   l'identification, par le dispositif informatique (305), de ces scores de corrélation à partir de l'ensemble de scores de corrélation qui dépassent une valeur seuil prédéterminée;
   le regroupement, par le dispositif informatique (305), des régions de surface appartenant aux scores de corrélation qui dépassent la valeur seuil prédéterminée en un groupe de régions de surface pertinentes;
   la mise en relation du profil thermique capturé du groupe de régions de surface pertinentes avec la valeur de déflexion déterminée de l'au moins un point caractéristique (104, 106);
   la capture du profil thermique du groupe de régions de surface pertinentes uniquement, et la détermination de la valeur de déflexion de l'au moins un point caractéristique (104, 106) sur la base du profil thermique du groupe de régions de surface pertinentes;
   la détermination d'une forme de la surface (102) du corps (100) sur la base de la valeur de déflexion de l'au moins un point caractéristique (104, 106).

2. Procédé selon la revendication 1,
dans lequel l'au moins un point caractéristique (104, 106) est un bord ou un coin du corps (100).

3. Procédé selon l'une quelconque des revendications 1 ou 2, comprenant en outre
la fixation d'un capteur de température (315) qui est attribué à l'unité d'acquisition de température (310) à chacune des régions de surface pertinentes.

4. Procédé selon l'une quelconque des revendications précédentes, comprenant en outre
la transmission du profil thermique du groupe de régions de surface pertinentes à une station de base (420) pour déterminer la valeur de déflexion du point caractéristique et la forme du corps.

**5.** Procédé selon l'une quelconque des revendications précédentes, dans lequel le corps (100) est un corps d'antenne d'une antenne (410).

**6.** Procédé selon la revendication 5, dans lequel le corps d'antenne est un corps multicouche.

**7.** Procédé selon l'une quelconque des revendications précédentes, dans lequel le profil thermique du corps (100) est capturé par l'unité d'acquisition de température (310) sur une période de temps prédéterminée.

**8.** Procédé selon l'une quelconque des revendications précédentes, dans lequel la valeur de déflexion de l'au moins un point caractéristique (104, 106) est déterminée par l'unité de détermination de déflexion (320) sur une période de temps prédéterminée.

**9.** Système d'antenne (400), comprenant:

une antenne (410);
une station de base (420);
une unité d'acquisition de température (310) associée à l'antenne (410);
une unité de détermination de déflexion (320); et
un dispositif informatique (305);
**caractérisé en ce que**
le dispositif informatique (305) est configuré pour exécuter le procédé selon l'une quelconque des revendications 1 à 8.

Fig. 1

Fig. 2

Fig. 3

310

300

305

320

Fig. 4

100

410  250

200

310,315  320

305

420

400

Fig. 5

500

510

520

530

540

550

560

570

580

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Accuracy Improving Deformation Measurement System for Large Components in Thermal Vacuum Using Close-Range Photogrammetry. **ZHU XUSHENG et al.** International Journal of Precision Engineering and Manufacturing. Korean Society for Precision Engineering, Springer, 21 April 2020, vol. 21, 1201-1216